# EUROPEAN PATENT APPLICATION

(11) **EP 4 624 251 A1**
(43) Date of publication of application: **01.10.2025**
(21) Application number: 23895895.3
(22) Date of filing: 29.05.2023
(51) Int. Cl.: B60N 5/00, E05D 3/08, F16C 11/04

(54) **BIDIRECTIONAL SWING DEVICE AND VEHICLE**

(30) Priority: 28.11.2022 CN 202223204989 U
(71) Applicant: BYD Company Limited, Shenzhen, Guangdong 518118 (CN)
(72) Inventor: DUAN, Yucun, Shenzhen, Guangdong 518118 (CN); QIN, Qiongbo, Shenzhen, Guangdong 518118 (CN); WANG, Dahai, Shenzhen, Guangdong 518118 (CN); LIN, Jianming, Shenzhen, Guangdong 518118 (CN); ZOU, Jiajian, Shenzhen, Guangdong 518118 (CN)
(74) Representative: Taor, Simon Edward William
(86) International application number: PCT/CN2023/096882
(87) International publication number: WO 2024/113729

(57) **Abstract**

Provided is a vehicle. The vehicle is provided with a bidirectional swing apparatus. The bidirectional swing apparatus includes a bidirectional rotation assembly. The bidirectional rotation assembly includes a first cam and a second cam disposed coaxially with the first cam. The first cam is provided with a first cam top in a circumferential direction of the bidirectional rotation assembly. The second cam is provided with two second cam tops. The two second cam tops are disposed on two sides of the second cam bottom in the circumferential direction of the bidirectional rotation assembly. The second cam bottom or the two second cam tops are disposed opposite to the first cam top. When the first cam top is opposite to the second cam top, a swing end is in a forward swing state or a reverse swing state relative to a fixed end. When the first cam top is opposite to the second cam bottom, the swing end is in an initial position.

## Description

### CROSS-REFERENCE TO RELATED APPLICATIONS

This application claims priority to Chinese Patent Application No. 2022232049897, filed on November 28, 2022 and entitled "BIDIRECTIONAL SWING APPARATUS AND VEHICLE", which is incorporated herein by reference in its entirety.

### TECHNICAL FIELD

This application relates to the field of vehicle technologies, and in particular to a bidirectional swing apparatus and a vehicle.

### BACKGROUND

In related technologies, user passages of an amusement park, a movie theater, and a commercial vehicle may be blocked by using a bidirectional swing apparatus. For example, driving space in which a driver is located and passenger space in which passengers are located are spaced apart, which can prevent the passengers from being close to the driver to interfere with driving of the driver or impact the driver's field of view, and can also prevent the passengers from rapidly entering the passenger space, thereby avoiding congestion of the passengers in a process of entering the passenger space.

However, an existing bidirectional swing apparatus is usually unidirectionally spaced, and allows the passengers to enter unidirectionally only. For example, the passengers enter the passenger space from a front door only, and cannot get off from the front door. When a traffic accident occurs, passenger escape is affected. Moreover, the existing bidirectional swing apparatus is complex in structure, low in reliability, short in service life, and relatively high in costs.

### SUMMARY

This application is intended to solve at least one of technical problems in the prior art. Therefore, one objective of this application is to provide a bidirectional swing apparatus. The bidirectional swing apparatus may be opened bidirectionally, and is simple in structure, high in stability, and low in costs.

This application further provides a vehicle that uses the bidirectional swing apparatus.

According to a first aspect, provided is a bidirectional swing apparatus in embodiments of this application, the bidirectional swing apparatus is provided with a fixed end, and a swing end capable of bidirectionally swinging relative to the fixed end. The bidirectional swing apparatus includes a bidirectional rotation assembly. The bidirectional rotation assembly includes a first cam and a second cam disposed coaxially with the first cam. The first cam is provided with a first cam top in a circumferential direction of the bidirectional rotation assembly. The second cam is provided with a second cam bottom and two second cam tops. The two second cam tops are disposed on two sides of the second cam bottom in the circumferential direction of the bidirectional rotation assembly. The second cam bottom or the two second cam tops are disposed opposite to the first cam top. When the first cam top is opposite to the second cam top, the swing end is in a forward swing state or a reverse swing state relative to the fixed end. When the first cam top is opposite to the second cam bottom, the swing end is in an initial position.

Based on the bidirectional swing apparatus in embodiments of this application, a first cam cooperates with a second cam, so that a bidirectional swing structure is simpler, and the simplified structure can reduce costs, improve reliability, and prolong a service life.

Optionally, an angle between two adjacent second cam tops is equal to a bidirectional rotation angle of the swing end.

In some embodiments, the first cam further includes at least two first cam bottoms, and included angles between the two first cam bottoms and the first cam top are the same or different; and included angles between the two second cam tops and the second cam bottom are the same or different.

Further, at least two first cam tops are provided, and the two first cam tops and the two first cam bottoms are spaced apart; and at least two second cam bottoms are provided, and the two second cam bottoms and the two second cam tops are spaced apart. Further, a first transition section is disposed between the first cam top and the first cam bottom, and a smooth transition is formed between the first cam top and the first transition section, and between the first transition section and the first cam bottom; and a second transition section is disposed between the second cam top and the second cam bottom, and a smooth transition is formed between the second cam top and the second cam bottom, and between the second transition section and the second cam bottom arc.

Optionally, the first cam bottom is configured as a first cam bottom arc, and a radian of the first transition section is greater than that of the first cam bottom arc; and the second cam bottom is configured as a second cam bottom arc, and a radian of the second transition section is greater than that of the second cam bottom arc.

Further, the bidirectional swing apparatus further includes a support and a swing arm, where the support is formed as the fixed end, and the swing arm is formed as the swing end.

According to some embodiments of this application, the bidirectional rotation assembly further includes a first elastic member, where the first elastic member is disposed between the first cam and the support, and/or disposed between the second cam and the swing arm.

Further, the first cam is fastened to the support through a first key, at least one guide slot is disposed on an outer wall of the second cam, and one radial side of a second key is in sliding fit with the guide slot.

Further, a fixed slot opposite to the guide slot is disposed on an inner wall of the swing arm, and another radial side of the second key is disposed in the fixed slot.

In some embodiments, the bidirectional swing apparatus further includes a spacer pin, where the spacer pin is disposed in the swing arm. A spacer slot cooperating with the spacer pin is disposed on the support. The spacer slot is provided with a first end point and a second end point which are located at both ends of a circumferential direction. An end portion of the spacer pin stretches into the spacer slot. When the spacer pin is located at the first end point or the second end point, the first cam top directly faces the second cam top. A slot depth of the spacer slot gradually decreases from a slot midpoint to an extension direction of the first end point and the second end point.

Further, the bidirectional swing apparatus further includes a second elastic member, where the second elastic member is disposed on the swing arm and located between the spacer pin and the swing arm.

Further, a slot depth of the spacer slot gradually decreases from a slot midpoint to an extension direction of the first end point and the second end point.

Further, a first fixed member is configured as a fixed seat. The fixed seat is provided with a first slot facing the support. The support is provided with a second slot cooperating with the first slot. The first slot and the second slot are spliced and clamped at the fixed end.

Further, a second fixed member includes a connector and an installing support. The connector is connected to the support, and the installing support and the connector are clamped in a plane.

According to a second aspect, a vehicle in embodiments of this application includes the bidirectional swing apparatus in the foregoing embodiments.

In some embodiments, the vehicle includes two bidirectional swing apparatuses, where the two bidirectional swing apparatuses are disposed on two sides of a passage oppositely.

Additional aspects and advantages of this application will be described in part in the following description, and in part will become clear from the following description, or may be learned through the practice of this application.

### BRIEF DESCRIPTION OF DRAWINGS

The foregoing additional aspects and advantages of this application will be clear and easily understood from the description of the embodiments taken in conjunction with the following drawings, where:
FIG. 1 is a schematic diagram of a vehicle according to an embodiment of this application;
FIG. 2 is a schematic diagram of a bidirectional swing apparatus according to an embodiment of this application;
FIG. 3 is another schematic diagram of a bidirectional swing apparatus according to an embodiment of this application;
FIG. 4 is a split view of a bidirectional swing apparatus according to an embodiment of this application;
FIG. 5 is a split view of a bidirectional swing apparatus at one angle according to an embodiment of this application;
FIG. 6 is a split view of a bidirectional swing apparatus at another angle according to an embodiment of this application;
FIG. 7 is a schematic diagram of a support according to an embodiment of this application;
FIG. 8 is a schematic diagram of a first cam top, a first transition section, and a first cam bottom arc according to an embodiment of this application; and
FIG. 9 is a schematic diagram of a second cam top, a second transition section, and a second cam bottom arc according to an embodiment of this application.

Reference signs in drawings:
1000: vehicle;
100: bidirectional swing apparatus; 200: armrest tube; 300: fence;
10: support; 11: spacer slot;
20: swing arm; 21: fixed slot;
30: bidirectional rotation assembly; 31: first cam; 32: second cam; 321: guide slot; 33: first elastic member;
41: first key; 42: second key;
51: spacer pin; 52: second elastic member;
60: fixed seat;
71: connector; 72: installing support;
81: spacer; 82: pin shaft; 83: shaft cover; 84: sleeve;
100a: first bidirectional swing apparatus; 100b: second bidirectional swing apparatus;
a: driving space; b: passenger space; c: blocking position; d: entrance position; e: exit position;
31a: first cam top; 31b: first transition section; 31c: first cam bottom arc; 32a: second cam top; 32b: second transition section; and 32c: second cam bottom arc.

### DESCRIPTION OF EMBODIMENTS

Embodiments of this application are described in detail below, and examples of the embodiments are shown in the drawings, where same or similar reference numerals throughout represent same or similar elements or elements having same or similar functions. The embodiments described below with reference to the drawings are exemplary and are merely used to explain this application, and shall not be construed as a limitation on this application.

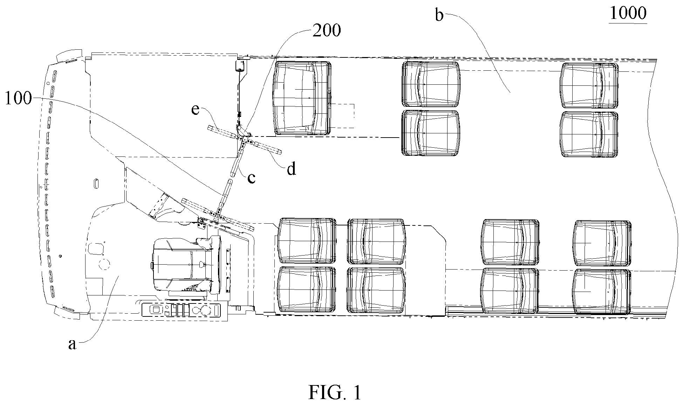

The following describes a bidirectional swing apparatus 100 and a vehicle 1000 according to embodiments of this application with reference to FIG. 1 to FIG. 9.

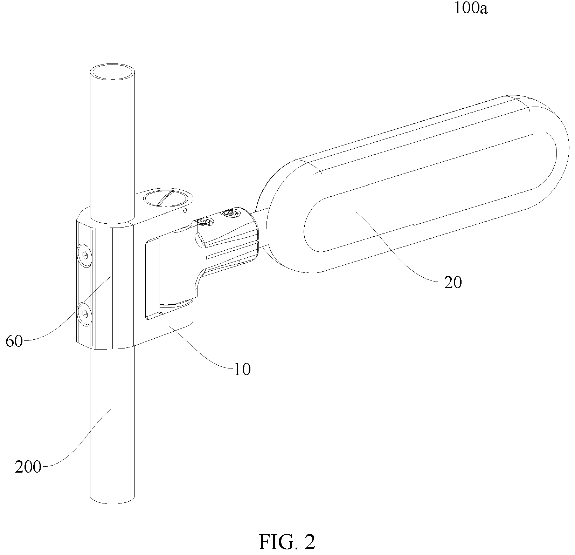

As shown in FIG. 2, FIG. 3, and FIG. 4, according to embodiments of this application in a first aspect, the bidirectional swing apparatus 100 is provided with a fixed end, and a swing end capable of bidirectionally swinging relative to the fixed end.

The bidirectional swing apparatus 100 includes a bidirectional rotation assembly 30, where the bidirectional rotation assembly 30 includes a first cam 31 and a second cam 32 disposed coaxially with the first cam 31. The first cam 31 is fixedly connected to the fixed end. The second cam 32 is fixedly connected to the swing end. The first cam 31 is provided with a first cam top 31a in a circumferential direction of the bidirectional rotation assembly 30. The second cam 32 is provided with two second cam tops 32a. The two second cam tops 32a are disposed on two sides of the second cam bottom in the circumferential direction of the bidirectional rotation assembly 30. The second cam bottom or the two second cam tops 32a are disposed opposite to the first cam top 31a.

That is, the second cam 32 may be provided with two second cam tops 32a and one second cam bottom located between the two second cam tops 32a. Correspondingly, the first cam 31 may be provided with at least one first cam top 31a, so that one first cam top 31a may selectively be opposite to one second cam top 32a, one second cam bottom, or another second cam top 32a to realize bidirectional rotation from an initial position.

Certainly, a structure of the bidirectional rotation assembly 30 according to embodiments of this application is not limited thereto. In some embodiments, the first cam 31 may be provided with two first cam tops 31a and one first cam bottom located between the two first cam tops 31a. Correspondingly, the second cam 32 may be provided with at least one second cam top 32a, so that one second cam top 32a may selectively be opposite to one first cam top 31a, one first cam bottom, or another first cam top 31a to realize bidirectional rotation from an initial position.

When the first cam top 31a is opposite to the second cam top 32a, the swing end is in a forward swing state or a reverse swing state relative to the fixed end. When the first cam top 31a is opposite to the second cam bottom, the swing end is in the initial position.

In the bidirectional swing apparatus 100 according to embodiments of this application, the first cam 31 is disposed to cooperate with the second cam 32, so that a structure for realizing bidirectional swing is simpler, and the simplified structure can reduce costs, improve reliability, and prolong a service life.

According to some embodiments of this application, the second cam 32 is provided with at least two second cam tops 32a, and an angle between two adjacent second cam tops 32a is equal to a bidirectional rotation angle of the swing end.

Therefore, a total bidirectional swing stroke of the bidirectional swing apparatus 100 may be defined by two second cam tops 32a, so that the bidirectional rotation angle is more reasonable, location switching is simple and convenient, and working stability and reliability of the bidirectional swing apparatus 100 are improved.

Correspondingly, the first cam 31 may also be provided with at least two first cam tops 31a, and an angle between two adjacent first cam tops 31a is also equal to a bidirectional rotation angle of the swing end.

In some embodiments, the first cam 31 further includes at least two first cam bottoms, and included angles between the two first cam bottoms and the first cam top 31a are the same or different; and included angles between the two second cam tops 32a and the second cam bottom are the same or different.

For example, in embodiments in which angle spacings are the same, when a unidirectional rotation angle (during forward rotation or reverse rotation) is 90° or 60°, an angle between two adjacent cam tops (two first cam tops 31a or two second cam tops 32a) on the first cam 31 or the second cam 32 is 180° or 120°. The bidirectional rotation angle is a sum of two unidirectional rotation angles, that is, if an angle spacing between two cam tops on the first cam 31 is N°, the swing arm 20 (that is, the swing end) has a forward stroke of (N/2)° and a reverse stroke of (N/2)°.

For example, as shown in FIG. 2, in FIG. 2, an angle spacing between two first cam tops 31a is 180°, and a first cam bottom between two adjacent first cam tops 31a may be selectively opposite to the second cam top 32a. Correspondingly, an angle spacing between two second cam tops 32a is 180°, and a second cam bottom between two adjacent second cam tops 32a may be selectively opposite to the first cam top 31a, and an angle stroke corresponding to forward rotation of the swing arm 20 is 90°.

For example, the two first cam tops 31a on the first cam 31 are on a same projection circle, and an angle spacing between the two first cam tops 31a is 200° or 100°. Based on requirements, a side with an angle spacing of 100° may be selected as an adjustment region of the swing arm 20 or a region with an angle spacing of 200° may be selected as an adjustment region of the swing end. Correspondingly, the swing arm 20 may rotate 100° in a forward direction and rotate 100° in a reverse direction.

Therefore, a rotation angle of the swing end may be reasonably set according to an arrangement position of a passage and surroundings. For example, in an embodiment in which a passage is disposed in a vehicle, the rotation angle of the swing end may be reasonably set according to a geometric size of a separated region between driving space a and passenger space b, and may be adapted with different vehicles 1000 for use, thereby effectively increasing an applicable range of the bidirectional swing apparatus 100.

Certainly, angles of forward rotation and reverse rotation may also be different. In this case, angle spacings are different. For example, if a forward rotation angle is 90° and a reverse rotation angle is 60°, angle spacings between two first cam tops 31a and two second cam tops 32a are both 150°, an angle spacing between one first cam top 31a and one first cam bottom and an angle spacing between one second cam top 32a and one second cam bottom are both 90°, and an angle spacing between the other first cam top 31a and the first cam bottom and an angle spacing between the other second cam top 32a and the second cam bottom are both 60°.

It may be understood that at least two first cam tops 31a are provided, and the two first cam tops 31a and the two first cam bottoms are spaced apart; and at least two second cam bottoms are provided, and the two second cam bottoms and the two second cam tops 32a are spaced apart, so that the first cam 31 and the second cam 32 are staggered and engaged axially.

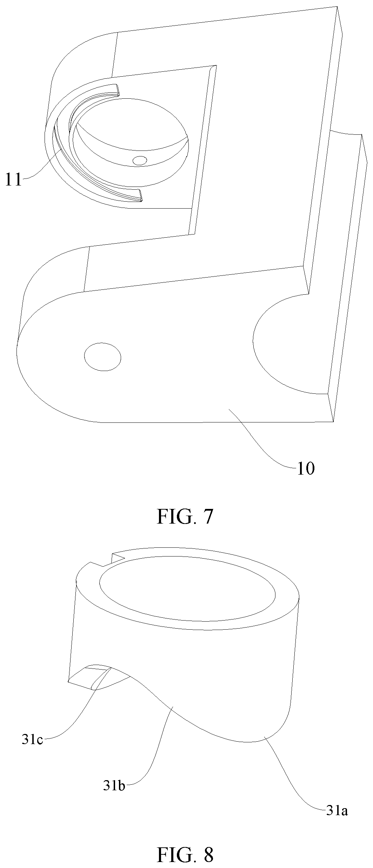

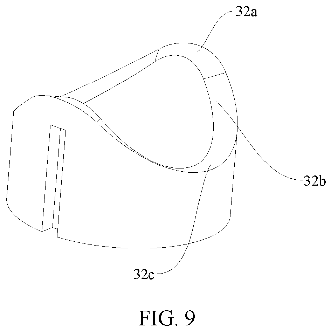

Further, as shown in FIG. 8 and FIG. 9, a first transition section 31b is disposed between the first cam top 31a and the first cam bottom, and a smooth transition is formed between the first cam top 31a and the first transition section 31b, and between the first transition section 31b and the first cam bottom; and a second transition section 32b is disposed between the second cam top 32a and the second cam bottom, and a smooth transition is formed between the second cam top 32a and the second transition section 32b, and between the second transition section 32b and the second cam bottom.

Therefore, when the swing arm 20 is pushed to rotate in a forward direction or a reverse direction, engagement between the first cam 31 and the second cam 32 always keeps a smooth transition, and rotation of the swing arm 20 can be smoother, thereby reducing jitter in a swing process and improving use experience.

Further, the first cam bottom is configured as a first cam bottom arc 31c, and the second cam bottom is configured as a second cam bottom arc 32c. Moreover, a radian of the first transition section 31b is greater than that of the first cam bottom arc 31c, and a radian of the second transition section 32b is greater than that of the second cam bottom arc 32c.

Therefore, in a reset process of the swing end, the first transition section 31b whose radian is greater than that of the first cam bottom arc 31c and the second transition section 32b whose radian is greater than that of the second cam bottom arc 32c may implement fast resetting, thereby increasing a reset speed.

The first cam top 31a and the second cam top 32a each may be one vertex, or may be one arc surface.

According to some embodiments of this application, the bidirectional swing apparatus 100 further includes a support 10 and a swing arm 20, where the support 10 is formed as the fixed end, and the swing arm 20 is formed as the swing end.

For example, the bidirectional swing apparatus 100 may be used as a passage blocking apparatus, and is applied to a vehicle.

The swing arm 20 may block a passage, or may be driven by the bidirectional rotation assembly 30 to rotate in a forward direction or a reverse direction until the passage is passable to implement selective blocking by the bidirectional swing apparatus 100.

Specifically, the first cam 31 and the second cam 32 are engaged in an axial direction of the swing arm 20. When the first cam 31 and a cam top of the second cam 32 are staggered, the swing arm 20 may block the passage. However, when the first cam 31311 and a cam top of the second cam 32 are opposite to each other, the swing arm 20 rotates in a forward direction or a reverse direction by a specific angle to open the passage.

For example, the bidirectional swing apparatus 100 is disposed in a vehicle, and is configured to selectively block the passage between the driving space a and the passenger space b. Referring to FIG. 1, the support 10 is disposed in a vehicle body (for example, an armrest tube 200, and a plane defined by a fence 300 surrounding the driving space a) to be selectively switched, by the swing arm 20, among a blocking position c in which the passenger space b is blocked from the driving space a, an entrance position d in which the passenger space b is in communication with the driving space a, and an exit position e.

In other words, the swing arm 20 may be switched among three positions with angle spacings, where a position in the middle is the blocking position c. In this position, the driving space a and the passenger space b are spaced apart. When a passenger enters the passenger space b from a front door, the swing arm 20 needs to be pushed toward the side of the passenger space b, and the swing arm 20 is switched to the entrance position d in the passenger space b. In this position, the passenger can move to the passenger space b from the driving space a. When each passenger enters the passenger space b, the swing arm 20 needs to be pushed toward the entrance position d, so that the passenger can be diverted and guided to avoid congestion, and the passenger can quickly enter the passenger space b. When the passenger needs to get off from the front door, the passenger needs to push the swing arm 20 toward the side of the driving space a, and the swing arm 20 is switched to the exit position e in the driving space e. In the exit position e, the passenger can get off through the front door.

Then, by disposing the bidirectional rotation assembly 30, the swing arm 20 may rotate in a forward direction relative to the blocking position c in the middle to the entrance position d, or rotate in a reverse direction to the exit position e, that is, rotation toward the entrance position d is defined as forward rotation, and rotation toward the exit position e is defined as reverse rotation.

In the blocking position c, the first cam top 31a is located in the second cam bottom arc 32c between two adjacent second cam tops 32a. In the entrance position d, the swing arm 20 is located on the side of the passenger space b, and the first cam top 31a is opposite to one second cam top 32a. In the exit position e, the swing arm 20 is on located on the side of the driving space a, and the first cam top 31a is opposite to the other second cam top 32a.

In the bidirectional swing apparatus 100 according to an embodiment of this application, a first cam 31 and a second cam 32 are disposed, and the first cam 31 and the second cam 32 fit with each other for transmission to implement position switching. Forward rotation and reverse rotation can be realized by swinging the swing arm 20, so that position switching is simpler and more convenient. When bidirectional opening is implemented to improve use security of the bidirectional swing apparatus 100, a service life of the bidirectional swing apparatus 100 may also be prolonged while the bidirectional rotation assembly 30 is simple in structure, high in stability, and lower in costs.

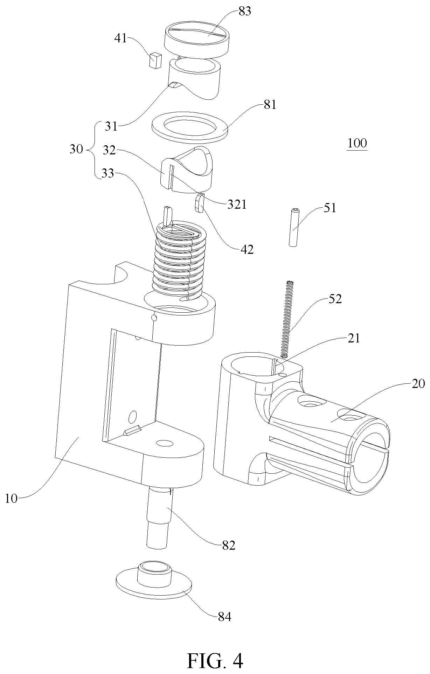

As shown in FIG. 4, according to some embodiments of this application, the bidirectional rotation assembly 30 further includes a first elastic member 33, where the first elastic member 33 is disposed between the first cam 31 and support 10, and/or disposed between the second cam 32 and the swing arm 20.

That is, in the entrance position d and the exit position e, the first cam top 31a is opposite to the second cam top 32a, so that the first elastic member 33 is compressed to provide a driving force for the swing arm 20 to be reset to the blocking position c, and when the first elastic member 33 is reset, the second cam top 32a is pushed to move to the first cam bottom arc 31c of the first cam 31.

Specifically, when the swing arm 20 is in the blocking position c, the first elastic member 33 is in a release state. When the swing arm 20 is in the entrance position d or the exit position e, the first elastic member 33 is compressed. However, a reset force of the first elastic member 33 after being compressed may push the swing arm 20 to be reset to the blocking position c. The first cam 31 and the second cam 32 are both in curve transitions, and reset resistance in an elastic force reset process is smaller, so that an automatic reset effect of the swing arm 20 is better.

It may be understood that in some embodiments, the first elastic member 33 is disposed only between the first cam 31 and the support 10. In some other embodiments, the first elastic member 33 is disposed only between the second cam 32 and the swing arm 20. The first elastic member 33 may alternatively be disposed between the first cam 31 and the support 10, and between the second cam 32 and the swing arm 20 at the same time.

A driving force required for resetting needs to be determined based on a weight of the swing arm 20, and an elastic coefficient of the first elastic member 33 further needs to be determined based on the driving force.

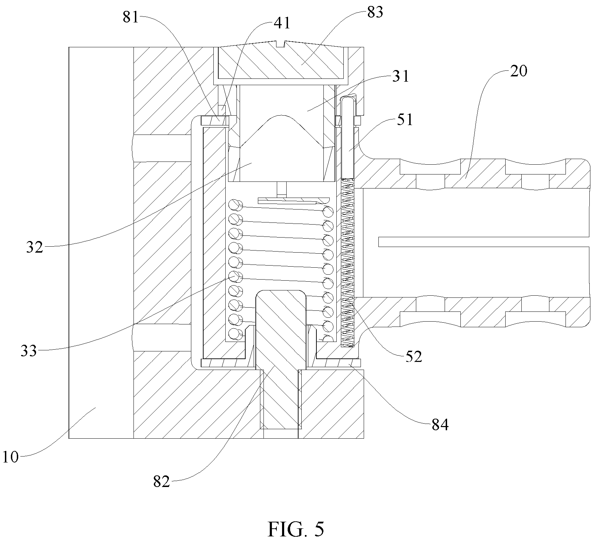

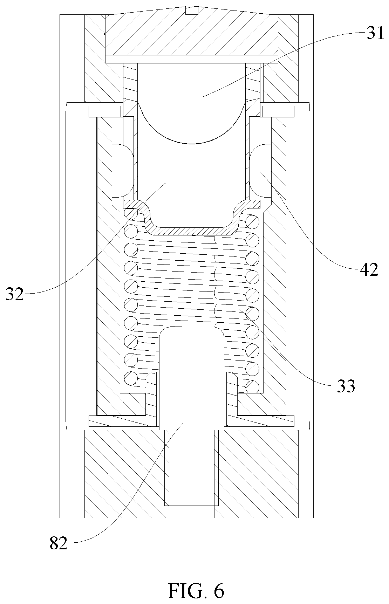

As shown in FIG. 5 and FIG. 6, the first cam 31 is fastened to the support 10 through a first key 41, at least one guide slot 321 is disposed on an outer wall of the second cam 32, and one radial side of a second key 42 is in sliding fit with the guide slot 321. A fixed slot 21 opposite to the guide slot 321 in a radial direction is disposed on an inner wall of the swing arm 20, and another radial side of the second key 42 is in sliding fit with the fixed slot 21.

For example, the first cam 31 is fixed relative to the support 10. Correspondingly, a key slot is disposed on the first cam 31. The first cam 31 is relatively fastened to the support 10 by using a first key 41 that is at least partially embedded in the key slot, and a shaft cover 83 is further disposed on an upper end. The swing arm 20 is disposed on the support 10. A spacer 81 may be disposed in a circumferential gap between the swing arm 20 and the support 10. A pin shaft 82 and a sleeve 84 are disposed on a bottom end of the support 10. The swing arm 20 is rotatably disposed on the sleeve 84, and the first elastic member 33 is sleeved outside the sleeve 84. The second cam 32 is disposed on an upper end of the first elastic member 33, and may selectively abut against the first elastic member 33. One or more second keys 42 are disposed on an inner wall of the support 10. Correspondingly, one or more guide slots 321 are disposed on the second cam 32, and one or more fixed slots 21 are disposed on the swing arm 20. One radial side of the second key 42 is in sliding fit with the guide slot 321, and another radial side of the second key 42 is fixed into the fixed slot 21. While circumferential anti-rotation limitation is realized, the second cam 32 may slide up and down relative to the second key 42, and motion stability of the swing arm 20 may also be improved.

Preferably, a quantity of the second keys 42 corresponds to a quantity of the second cam tops 32a, and the second keys 42 are disposed corresponding to the second cam tops 32a. The second key 42 is a Woodruff key. A planar side of the Woodruff key is connected to the fixed slot 21, and an arc side thereof is in sliding fit with the guide slot 321.

As shown in FIG. 4 and FIG. 7, according to some embodiments of this application, the bidirectional swing apparatus 100 further includes a spacer pin 51, where the spacer pin 51 is disposed in the swing arm 20. A spacer slot 11 cooperating with the spacer pin 51 is disposed on the support 10. The spacer slot 11 is provided with a first end point and a second end point which are located at both ends of a circumferential direction. An end portion of the spacer pin 51 stretches into the spacer slot 11. In the entrance position d and the exit position e, the spacer pin 51 is pushed to abut against the first end point and the second end point of the spacer slot 11 respectively. When the spacer pin 51 is located at the first end point or the second end point, the first cam top 31a directly faces the second cam top 32a.

Specifically, an extension angle of the spacer slot 11 is consistent with a sum of angles of a forward stroke and a reverse stroke of the swing arm 20. Two circumferential ends of the spacer slot 11 are the first end point and the second end point respectively, so as to avoid excessive rotation of the swing arm 20 by cooperation of the spacer pin 11 and spacer slot 51 and improve adjustment stability and reliability of the bidirectional swing apparatus 100.

Referring to FIG. 7, a slot depth of the spacer slot 11 gradually decreases from a slot midpoint to an extension direction of the first end point and the second end point, so as to compress the second elastic member 52 of the bidirectional swing apparatus 100 when the swing arm 20 is switched from the blocking position to the entrance position d or the exit position e.

Therefore, when the swing arm 20 is switched from the blocking position c to the entrance position d or from the blocking position c to the exit position e, the second elastic member 52 is compressed, and a reset force of the second elastic member 52 and a reset force of the first elastic member 33 may jointly act on the swing arm 20, so that a reset effect of the swing arm 20 is better, and more rapid resetting can be implemented.

In embodiments as shown in FIG. 5 and FIG. 7, the bidirectional swing apparatus 100 further includes a second elastic member 52, where the second elastic member 52 is disposed on the swing arm 20 and located between the spacer pin 51 and the swing arm 20.

Specifically, an accommodation groove is disposed on the swing arm 20. The second elastic member 52 is disposed in the accommodation groove. One end of the spacer pin 51 stretches into the accommodation groove, and the other end of the spacer pin 51 stretches out of the accommodation groove and stretches into the spacer slot 11. Therefore, the second elastic member 52 may elastically act on the spacer pin 51, so as to ensure that the spacer pin 51 is always in the spacer slot 11, thereby improving limiting reliability and stability of the swing arm 20 after the spacer pin 51 cooperates with the spacer slot 11.

As shown in FIG. 1, FIG. 2, and FIG. 3, according to some embodiments of this application, the bidirectional swing apparatus 100 includes a first bidirectional swing apparatus 100a and a second bidirectional swing apparatus 100b. The first bidirectional swing apparatus 100a and the second bidirectional swing apparatus 100b are oppositely disposed on both sides of a passage. The first bidirectional swing apparatus 100a is fastened to a fixed end (for example, an armrest tube 200 on a vehicle body) through a first fixed member, and the second bidirectional swing apparatus 100b is fastened to a plane (for example, a plane defined by a fence 300 surrounding the driving space a) through a second fixed member.

That is, in an embodiment of this application in which two bidirectional swing apparatuses 100 are applied to a vehicle, the driving space a and the passenger space b may be spaced apart.

Certainly, the bidirectional swing apparatus 100 in this embodiment of this application is not limited thereto. In some other embodiments, only the first bidirectional swing apparatus 100 may be disposed, or only the second bidirectional swing apparatus 100 may be disposed, and the swing arm 20 of the first bidirectional swing apparatus 100 or the second bidirectional swing apparatus 100 is longer, so that the passage may be spaced by one bidirectional swing apparatus 100.

As shown in FIG. 2, further, a first fixed member is configured as a fixed seat 60. The fixed seat 60 is provided with a first slot facing the support 10. The support 10 is provided with a second slot cooperating with the first slot. The first slot and the second slot are spliced and clamped in a fixed end.

For example, in an embodiment in which the fixed end is an armrest tube 200, both the first slot and the second slot are configured as arc slots, and both of the first slot and the second slot are fitted to the armrest tube 200. In addition, by using a fastener passing through the fixed seat 60, the armrest tube 200, and the support 10 sequentially, the armrest tube 200, the fixed seat 60, and the support 10 are fastened to the armrest tube 200, thereby improving fastening stability and reliability of the bidirectional swing apparatus 100 on the vehicle body.

That is, fastening stability and reliability of the first bidirectional swing apparatus 100 may be improved by splicing the first slot and the second slot to be fastened to the fixed end.

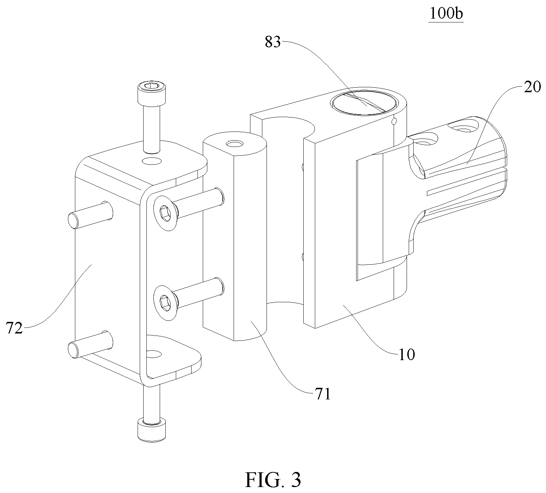

As shown in FIG. 3, a second fixed member includes a connector 71 and an installing support 72. The connector 71 is connected to the support 10, and the installing support 72 and the connector 71 are clamped in a plane.

For example, in an embodiment in which the bidirectional swing apparatus 100 is disposed on a vehicle body, the connector 71 and the installing support 72 are respectively fitted to both sides of the fence 300 (that is, a plane defined by the fence 300) of the vehicle body defining the driving space a, so as to fasten the bidirectional swing apparatus 100 to the fence 300.

Specifically, the connector 71 is disposed on the second slot to fill the second slot, so that one side surface of the support 10 facing the installing support 72 is smooth, and one side surface of the installing support 72 facing the connector 71 is also configured as a plane. The two planes are clamped on two sides of the plane to implement surface fitting and fastening, which can improve fastening stability. Moreover, more fastening forms may be selected, so that a range of application is wider.

It may be understood that two first bidirectional swing apparatuses 100 disposed opposite to each other on both sides of the passage may also be used. Alternatively, the passage is blocked by using two second bidirectional swing apparatuses 100.

According to a second aspect, a vehicle 1000 in an embodiment of this application includes the bidirectional swing apparatus 100 in the foregoing embodiments. Technical effects of the vehicle 1000 are consistent with those of the foregoing bidirectional swing apparatus 100, and details are not described herein again.

For example, in some embodiments, there is a passage between driving space a and passenger space b of the vehicle. One or two bidirectional swing apparatuses 100 may be disposed on the passage. The two bidirectional swing apparatuses 100 are disposed opposite to each other, and both are fastened to an armrest tube 200, or one is fastened to the armrest tube 200, and the other is fastened to one plane of a vehicle body.

In description of this application, it should be understood that the indicative orientation or positional relationship indicated by terms "center", "longitudinal", "transverse", "length", "width", "thickness", "upper", "lower", "front", "back", "left", "right", "vertical", "horizontal", "top", "bottom", "inside", "outside", "clockwise", "counterclockwise", "axial", "radial", and "circumferential" is based on the orientation or positional relationship shown in the drawings only for convenience of description of this application and simplification of description rather than indicating or implying that the apparatus or element referred to must have a particular orientation, be constructed and operate in a particular orientation, and thus is not to be construed as limiting this application.

In the description of this application, "a first feature" and "a second feature" may include one or more such features.

In the description of this application, "a plurality of" means two or more.

In description of this application, that the first feature is "above" or "below" the second feature may include that the first feature is in direct contact with the second feature, or may include that the first feature and the second feature are in contact with each other through another feature therebetween rather than direct contact.

In description of this application, that the first feature is "above", "on", and "over" the second feature includes that the first feature is directly above and obliquely above the second feature, or merely indicates that a horizontal height of the first feature is higher than that of the second feature.

In description of this specification, descriptions referring to the terms "one embodiment", "some embodiments", "exemplary embodiments", "examples", "specific examples", or "some examples" mean that specific features, structures, materials, or characteristics described in connection with the embodiment or example are included in at least one embodiment or example of this application. In this specification, the schematic representations of the foregoing terms are not necessarily aimed at a same embodiment or example. Moreover, specific features, structures, materials, or characteristics described may be combined in any one or more embodiments or examples in a suitable manner.

Although embodiments of the present disclosure have been shown and described, those of ordinary skill in the art may understand that many changes, modifications, substitutions, and variations can be made to these embodiments without departing from the principles and purposes of this application, and the scope of this application is defined by the claims and their equivalents.

## Claims

1. A bidirectional swing apparatus, having a fixed end, and a swing end capable of bidirectionally swinging relative to the fixed end, the apparatus comprising:
a bidirectional rotation assembly (30), wherein the bidirectional rotation assembly (30) comprises a first cam (31), and a second cam (32) disposed coaxially with the first cam (31), the first cam (31) is fixedly connected to the fixed end, the second cam (32) is fixedly connected to the swing end, the first cam (31) is provided with a first cam top (31a) in a circumferential direction of the bidirectional rotation assembly (30), the second cam (32) is provided with a second cam bottom and two second cam tops (32a), the two second cam tops (32a) are disposed on two sides of the second cam bottom in the circumferential direction of the bidirectional rotation assembly (30), and the second cam bottom or the two second cam tops (32a) are disposed opposite to the first cam top (31a); and
when the first cam top (31a) is opposite to the second cam top (32a), the swing end is in a forward swing state or a reverse swing state relative to the fixed end, and when the first cam top (31a) is opposite to the second cam bottom, the swing end is in an initial position.

2. The bidirectional swing apparatus according to claim 1, wherein an angle between two adjacent second cam tops (32a) is equal to a bidirectional rotation angle of the swing end.

3. The bidirectional swing apparatus according to claim 1 or 2, wherein the first cam (31) further comprises at least two first cam bottoms, and included angles between the two first cam bottoms and the first cam top (31a) are the same or different; and included angles between the two second cam tops (32a) and the second cam bottom are the same or different.

4. The bidirectional swing apparatus according to claim 3, wherein at least two first cam tops (31a) are provided, and the two first cam tops (31a) and the two first cam bottoms are spaced apart; and at least two second cam bottoms are provided, and the two second cam bottoms and the two second cam tops (32a) are spaced apart.

5. The bidirectional swing apparatus according to claim 3 or 4, wherein
a first transition section (31b) is disposed between the first cam top (31a) and the first cam bottom, and a smooth transition is formed between the first cam top (31a) and the first transition section (31b), and between the first transition section (31b) and the first cam bottom; and
a second transition section (32b) is disposed between the second cam top (32a) and the second cam bottom, and a smooth transition is formed between the second cam top (32a) and the second cam bottom, and between the second transition section (32b) and a second cam bottom arc (32c).

6. The bidirectional swing apparatus according to claim 5, wherein the first cam bottom is configured as a first cam bottom arc (31c), and a radian of the first transition section (31b) is greater than that of the first cam bottom arc (31c); and the second cam bottom is configured as a second cam bottom arc (32c), and a radian of the second transition section (32b) is greater than that of the second cam bottom arc (32c).

7. The bidirectional swing apparatus according to any one of claims 1 to 6, further comprising a support (10) and a swing arm (20), wherein the support (10) is formed as the fixed end, and the swing arm (20) is formed as the swing end.

8. The bidirectional swing apparatus according to claim 7, wherein the bidirectional rotation assembly (30) further comprises a first elastic member (33), and the first elastic member (33) is disposed between the first cam (31) and the support (10), and/or disposed between the second cam (32) and the swing arm (20).

9. The bidirectional swing apparatus according to claim 7 or 8, wherein the first cam (31) is fastened to the support (10) through a first key (41), at least one guide slot (321) is disposed on an outer wall of the second cam (32), and one radial side of a second key (42) is in sliding fit with the guide slot (321).

10. The bidirectional swing apparatus according to claim 9, wherein a fixed slot (21) opposite to the guide slot (321) is disposed on an inner wall of the swing arm (20), and another radial side of the second key (42) is disposed in the fixed slot (21).

11. The bidirectional swing apparatus according to any one of claims 7 to 10, further comprising a spacer pin (51), wherein the spacer pin (51) is disposed in the swing arm (20), a spacer slot (11) cooperating with the spacer pin (51) is disposed on the support (10), the spacer slot (11) is provided with a first end point and a second end point which are located at both ends of a circumferential direction, an end portion of the spacer pin (51) stretches into the spacer slot (11), and when the spacer pin (51) is located at the first end point or the second end point, the first cam top (31a) directly faces the second cam top (32a); and
a slot depth of the spacer slot (11) gradually decreases from a slot midpoint to an extension direction of the first end point and the second end point.

12. The bidirectional swing apparatus according to claim 11, further comprising a second elastic member (52), wherein the second elastic member (52) is disposed on the swing arm (20) and located between the spacer pin (51) and the swing arm (20).

13. The bidirectional swing apparatus according to claim 11 or 12, wherein a first fixed member is configured as a fixed seat (60), the fixed seat (60) is provided with a first slot facing the support (10), the support (10) is provided with a second slot cooperating with the first slot, and the first slot and the second slot are spliced and clamped at the fixed end.

14. The bidirectional swing apparatus according to any one of claims 11 to 13, wherein a second fixed member comprises a connector (71) and an installing support (72), the connector (71) is connected to the support (10), and the installing support (72) and the connector (71) are clamped in a plane.

15. A vehicle, comprising the bidirectional swing apparatus according to any one of claims 1 to 14.

16. The vehicle according to claim 15, comprising two of the bidirectional swing apparatuses, wherein the two bidirectional swing apparatuses are disposed oppositely on two sides of a passage.
